(19) Europäisches Patentamt
European Patent Office
Office européen des brevets

(11) **EP 3 474 043 A1**

(12) **EUROPÄISCHE PATENTANMELDUNG**

(43) Veröffentlichungstag:
**24.04.2019 Patentblatt 2019/17**

(51) Int Cl.:
*G01T 1/20* (2006.01)    *G01T 1/24* (2006.01)

(21) Anmeldenummer: **18195838.0**

(22) Anmeldetag: **21.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.10.2017 DE 102017124077**

(71) Anmelder: **YXLON International GmbH
22419 Hamburg (DE)**

(72) Erfinder: **BAVENDIEK, Klaus
22851 Norderstedt (DE)**

(74) Vertreter: **DTS Patent- und Rechtsanwälte
Schnekenbühl und Partner mbB
Marstallstrasse 8
80539 München (DE)**

(54) **DETEKTOR MIT VERKLEINERTEN RANDPIXEL ELEMENTEN**

(57) Die vorliegende Erfindung betrifft einen Detektor mit einem ersten Sensorelement (2a, 2a', 2a", 2a'''), welches eine Mehrzahl von linear hintereinander angeordneten ersten Pixelelementen (7a, 8a) aufweist, und einem zweiten Sensorelement (2b, 2b', 2b",2b'''), welches eine Mehrzahl von linear hintereinander angeordneten zweiten Pixelelementen (7b, 8b) aufweist, wobei das erste und zweite Sensorelement (2a, 2a', 2a", 2a''',2b, 2b', 2b",2b'''), nebeneinander montiert sind, sodass die zweiten Pixelelemente (7b, 8b) in einer Linie in Verlängerung zu den ersten Pixelelementen (7a, 8a) angeordnet sind. Die ersten Pixelelemente (7a, 8a) weisen erste zentrale Pixelelemente (7a) mit einer ersten Breite (b) auf, welche in einem ersten vorbestimmten im wesentlichen äquidistanten Abstand (a) zueinander linear hintereinander angeordneten sind, und die zweiten Pixelelemente (7b, 8b) weisen zweite zentrale Pixelelemente (7b) auf, mit einer zweiten Breite, welche der ersten Breite (b) entspricht. Die zweiten zentralen Pixelelemente (7b) sind in dem ersten vorbestimmten im Wesentlichen äquidistanten Abstand (a) zueinander linear hintereinander angeordneten, in dem die ersten zentralen Pixelelementen (7a) zueinander angeordnet sind, wobei eine Breite eines Pixelelementes der Dimension in Richtung der durch die hintereinander angeordneten Pixelelemente (7a, 8a, 7b, 8b) definierten Linie entspricht.

Ein Interzentralpixelabstand (i) von zueinander am nächsten liegenden ersten und zweiten Zentralpixelelemente (7a, 8a) der nebeneinander angeordneten Sensorelemente (2a, 2a', 2a", 2a''',2b, 2b', 2b",2b''') entspricht folgender Formel 1:

$$\text{(Formel 1)}$$

$$i = n*(a+b) + a,$$

wobei i der Interzentralpixelabstand, n eine natürliche Zahl, a der erste vorbestimmte im Wesentlichen äquidistanten Abstand, und b die jeweiligen Breite der Zentralpixelelemente (7a) ist.

. Zur Kompensation von Artefakten in der visuellen Darstellung sind in einem Zwischenraum zwischen den zueinander am nächsten liegenden ersten und zweiten Zentralpixelelementen (7a, 7b) der nebeneinander angeordneten Sensorelemente (2a, 2a', 2a", 2a''',2b, 2b', 2b",2b''') Randpixelelemente (8a, 8b) vorgesehen, welche linear hintereinander und in Linie zu den ersten und zweiten Zentralpixelelementen (7a, 7b) angeordnet sind, wobei die Randpixelelemente (8a, 8b) eine dritte Breite aufweisen, welche geringer ist als die erste und zweite Breite der ersten und zweiten Zentralpixelelemente (7a, 7b).

EP 3 474 043 A1

Fig. 4

**Beschreibung**

Die vorliegende Erfindung betrifft einen Detektor; ein gattungsbildender Detektor mit den oberbegrifflichen Merkmalen von Anspruch 1 ist beispielsweise aus der DE 10 2010 051 774 A1 bekannt.

In dieser ist ein Detektor beschrieben der in der industriellen Computertomografie eingesetzt wird. Wie in der medizinischen Computertomografie, wird in der industriellen Computertomografie zur Materialprüfung, ein Röntgenstrahl auf ein zu prüfendes Bauteil gerichtet. Die das Bauteil durchstrahlende Röntgenstrahlung wird in einem Detektor detektiert und mittels eines Computers werden dreidimensionale Bilder und/oder Schnittbilder durch das zu untersuchende Bauteil erstellt.

In der DE 10 2010 051 774 A1 wird ein Detektor beschrieben, der aus einer Vielzahl von in Längsrichtung nebeneinander angeordneten Sensorelementen aufgebaut ist. Beispielsweise sind dort mehrere Sensorelemente in einem Detektormodul zusammengefasst, jedes Detektormodul weist neben den Sensorelementen auch eine Signalverarbeitungsfunktionalität auf, mit der die in den Sensorelementen detektierten Signale verarbeitet werden. Die einzelnen Detektormodule sind in Reihe hintereinander angeordnet, sodass ein sogenannter Lineardetektor bereitgestellt wird.

Dieser Lineardetektor hat in der DE 10 2010 051 774 A1 eine U-Form, da er dort zur Prüfung vom sogenannten Reifencords, das sind Stahlgürtel in LKW Reifen, verwendet wird.

Jedes Sensorelement in der DE 10 2010 051 774 A1 weist eine Vielzahl von nebeneinander angeordneten Pixelelementen auf, sodass durch die hintereinander angeordneten Pixelelemente eine Linie definiert wird. Die Pixelelemente in jedem der Sensorelemente weisen die gleiche Breite auf und sind in einem vorgegebenen Abstand zueinander montiert, der immer derselbe ist.

Aufgrund der Tatsache, dass die Pixelelemente nicht direkt bis an die Kante eines Detektormoduls herangebaut werden können, tritt der Fall auf, dass zwischen zwei benachbarten Detektormodulen ein sogenannter Interpixelabstand zwischen zwei benachbarten Pixelelementen von diesen unterschiedlichen Modulen breiter ist als der Abstand zwischen den entsprechenden Pixelelementen innerhalb eines solchen Moduls. Dadurch wird an dieser Stelle eine Art "blinder Fleck" in dem generierten Bild hervorgerufen.

In dem beschriebenen Stand der Technik wird dieser ursprüngliche Nachteil dadurch gelöst, dass aus den Messergebnissen von benachbarten Randpixelelementen ein virtuelles Pixel in diesem Zwischenraum generiert wird und so dieser "blinde Fleck" zumindest durch Extrapolation ausgeglichen wird.

Gerade bei der Prüfung von Reifen hat es sich herausgestellt, dass auch mit dieser Konstruktion eines virtuellen Pixels nicht immer gewährleistet ist, dass die Cords in den Reifen in deren Verlauf genau detektiert werden, da es im Bereich des virtuellen Pixels manchmal zu einem Versatz in dem generierten Bild kommt, sodass es aussieht als ob diese dort gebrochen sind.

Ausgehend von dem zuvor beschriebenen Problem schlägt die Erfindung einen Detektor vor, bei dem auch in einem Zwischenraum zwischen benachbarten Pixeln von unterschiedlichen Sensorelementen ein aussagekräftigeres Bild generiert werden kann.

Dieses Problem wird mit dem Detektor von Anspruch 1 gelöst.

Der Detektor weist ein erstes Sensorelement auf, welches eine Mehrzahl von linear hintereinander angeordneten ersten Pixelelementen mit einer ersten Breite aufweist, und weist ein zweites Sensorelement auf, welches eine Mehrzahl von linear hintereinander angeordneten zweiten Pixelelementen aufweist, mit einer zweiten Breite, welche der ersten Breite entspricht. Die Breite eines Pixelelementes entspricht der Dimension in Richtung der durch die hintereinander angeordneten Pixelelemente definierten Linie. Das erste und zweite Sensorelement sind nebeneinander montiert, sodass die zweiten Pixelelemente in einer Linie in Verlängerung zu den ersten Pixelelementen angeordnet sind. Die ersten Pixelelemente weisen erste zentrale Pixelelemente auf, welche in einem ersten vorbestimmten im Wesentlichen äquidistanten Abstand zueinander linear hintereinander angeordneten sind. Die zweiten Pixelelemente weisen zweite zentrale Pixelelemente auf, welche in dem ersten vorbestimmten im Wesentlichen äquidistanten Abstand zueinander linear hintereinander angeordneten sind, in dem die ersten zentralen Pixelelementen zueinander angeordnet sind. Ein Interzentralpixelabstand von zueinander am nächsten liegenden ersten und zweiten Zentralpixelelemente der nebeneinander angeordneten Sensorelemente entspricht folgender Formel 1:

$$\text{(Formel 1)}$$

$$i = n*(a+b) + a,$$

wobei i der Interzentralpixelabstand, n eine natürliche Zahl, a der erste vorbestimmte im Wesentlichen äquidistanten Abstand zwischen Zentralpixelelementen, und b die jeweiligen Breite der Zentralpixelelemente ist.

Somit entspricht der Interzentralpixelabstand z.B. dem ersten vorbestimmten im Wesentlichen äquidistanten Abstand aufsummiert mit dem Wert der sich ergibt aus einem ganzzahligen Vielfachen der Summe aus dem ersten vorbestimmten im Wesentlichen äquidistanten Abstand und der jeweiligen Breite der Zentralpixelelemente.

Der erfindungsgemäße Detektor zeichnet sich insbesondere dadurch aus, dass in einem Zwischenraum zwischen den zueinander am nächsten liegenden ersten und zweiten Zentralpixelelementen der nebeneinander angeordneten Sensorelemente Randpixelelemente vorgesehen sind, welche linear hintereinander und in Linie zu den ersten und zweiten Zentralpixelelementen angeordnet sind, wobei die Randpixelelemente eine dritte Breite aufweisen, welche geringer ist als die erste und zweite Breite der ersten und zweiten Zentralpixelelemente. Durch diese Ausgestaltung wird gewährleistet, dass, mittels Signalverarbeitung, Visualisierungsartefakte in dem Zwischenraum zwischen zwei benachbarten Randpixeln von zwei Sensorelementen reduziert werden.

Es ist günstig wenn in dem Zwischenraum zwischen den zueinander am nächsten liegenden ersten und zweiten Zentralpixelelementen der nebeneinander angeordneten Sensorelemente eine derartige Anzahl von Randpixelelementen vorgesehen ist, die der natürlichen Zahl n aus Formel 1 entspricht. Hierdurch kann gewährleistet werden, dass, nach Verarbeitung der Sensorsignale der Randpixel, in der visualisierten Darstellung, wenn diese auf die Dimension der Pixel der Zentralpixel angepasst werden, ein artefaktfreies bzw. artefaktreduziertes Bild erhalten wird.

Es ist auch möglich, dass die Randpixelelemente durch erste und zweite Randpixel gebildet werden, wobei die ersten Randpixelelemente in Verlängerung zu den ersten Zentralpixelelementen in dem ersten Sensorelement angeordnet sind, und die zweiten Randpixelelemente in Verlängerung zu den zweiten Zentralpixelelementen in dem zweiten Sensorelement angeordnet sind.

Gemäß einer Ausgestaltung der Erfindung können auch die ersten Randpixelelemente in einem zweiten vorbestimmten im Wesentlichen äquidistanten Abstand zueinander linear hintereinander angeordneten sein. Die zweiten Randpixelelemente können auch in dem zweiten vorbestimmten im Wesentlichen äquidistanten Abstand zueinander linear hintereinander angeordneten sein, in dem die ersten Randpixelelemente zueinander angeordnet sein können. Ein Interrandpixelabstand von zueinander am nächsten liegenden ersten und zweiten Randpixelelementen der nebeneinander angeordneten Sensorelemente kann größer sein als der Abstand zwischen zwei zueinander benachbarten ersten bzw. zweiten Randpixelelementen. Dieser größere Abstand von Randpixelelementen von benachbarten Sensorelementen ist z.B. bauartbedingt und wird durch die erfindungsgemäße Anordnung, zumindest nach der Signalverarbeitung, im Wesentlichen kompensiert.

Gemäß einer möglichen Weiterbildung der Erfindung kann die Anzahl der ersten Randpixelelemente der Anzahl der zweiten Randpixelelemente entsprechen. Durch eine symmetrische Ausgestaltung ist die Herstellung der Sensorelemente einfacher.

Gemäß einer möglichen Weiterbildung der Erfindung kann die Breite der Randpixelelemente der Sensorelemente identisch breit sein. In diesem Fall berechnet sich die Breite c der Randpixel nach Formel 2:

(Formel 2)

$$c = \frac{\#R\,(b+a) + a - (\#R-2)*d - 2e - 2x - y}{\#R}$$

wobei #R der Anzahl der Randpixelelemente in dem Zwischenraum zwischen den zueinander am nächsten liegenden ersten und zweiten Zentralpixelelementen der nebeneinander angeordneten Sensorelemente ist, a der erste vorbestimmte im Wesentlichen äquidistante Abstand ist, b die jeweiligen Breite der Zentralpixelelemente ist, d der zweite vorbestimmten im Wesentlichen äquidistante Abstand zwischen zwei benachbarten Randpixelelementen innerhalb des jeweiligen Sensorelements ist, e ein Abstand zwischen einem Randpixelelement und einem zu diesem benachbarten Zentralpixelelement innerhalb des jeweiligen Sensorelements ist, x ein Abstand zwischen einem Rand des Sensorelementes und dem zum Rand benachbarten Randpixelelement des jeweiligen Sensorelementes ist, und y der Abstand zwischen zwei benachbarten Sensorelementen ist.

Soweit die benachbarten Sensorelemente auf zwei unterschiedlichen Platinen angeordnet sind, ergibt sich die Variable y in obiger Formel 2 aus der Summe des Abstandes von zwei benachbarten Platinen und zweimal dem Abstand des Sensorelementes vom Platinenrand.

Es können auch 10 oder mehr Randpixel vorgesehen sein. Bei einer derartigen Anzahl von Randpixeln wird der Ausgleich des vergrößerten Zwischenraumes zwischen den Randpixeln von benachbarten Sensorelementen besonders gut gewährleistet, da dieser auf eine größere Breite inkrementell aufgeteilt wird. Andere vorteilhafte Werte sind 2, 3, 4, 5, 6, 7, 8, 9, 11, 12, 13, 14, 20, 25. Diese Werte können jeweils für sich eine obere bzw. untere Grenze bilden.

Auch kann die natürlichen Zahl n aus Formel 1 10 oder mehr sein.. Bei einem solchen Abstand wird die Kompensation des vergrößerten Zwischenraumes durch die Bildverarbeitung auf einer größeren Strecke durchgeführt. Andere Werte für die Zahl n können auch 2, 3, 4, 5, 6, 7, 8, 9, 11, 12, 13, 14, 20, 25 sein. Diese Werte können jeweils für sich eine obere bzw. untere Grenze bilden.

Es hat sich als günstig herausgestellt, dass das erste und zweite Sensorelement auf einer gemeinsamen Platine angeordnet ist. Die Kompensation der bauartbedingten Abstände kann auch zwischen Sensorelementen auf einer gemeinsamen Platine erfolgen.

Alternativ zu dem zuvor beschriebenen Fall kann auch das erste Sensorelement auf einer ersten Platine angeordnet sein und das zweite Sensorelement auf einer zweiten Platine angeordnet sein. Die erste und zweite Platine können im Wesentlichen auf Stoß nebeneinander angeordnet sein, sodass sich eine erste Kante der ersten Platine und eine zweiten Kante der zweiten Platine derart gegenüberliegen, dass die Kanten senkrecht zu der durch die hintereinander angeordneten Pixelelemente definierten Linie verläuft.

Es ist auch möglich, dass der Abstand von dem der ersten Kante am nächsten liegenden ersten Randpixelelement zu der ersten Kante größer ist als der Abstand zwischen benachbarten ersten Randpixelelementen. Alternativ oder zusätzlich kann der Abstand von dem der ersten Kante am nächsten liegenden ersten Randpixelelement zu der ersten Kante größer sein als der Abstand zwischen benachbarten ersten Zentralpixelelementen. Alternativ oder zusätzlich kann der Abstand von dem der zweiten Kante am nächsten liegenden zweiten Randpixelelement zu der zweiten Kante größer sein als der Abstand zwischen benachbarten zweiten Randpixelelementen. Alternativ oder zusätzlich kann der Abstand von dem der zweiten Kante am nächsten liegenden zweiten Randpixelelement zu der zweiten Kante größer sein als der Abstand zwischen benachbarten zweiten Zentralpixelelementen.

Es ist gemäß einer weiteren Ausgestaltung auch möglich, dass die Summe aus dem Abstand zwischen der ersten und zweiten Kante, dem Abstand von dem der ersten Kante am nächsten liegenden ersten Randpixelelementes zu der ersten Kante, und dem Abstand von dem der zweiten Kante am nächsten liegenden zweiten Randpixelelementes zu der zweiten Kante, dem Interrandpixelabstand entspricht.

Die Randpixelelemente können eine Breite von zwischen 0,910 mm und 0,920 mm aufweisen. Weitere vorteilhafte Breiten der Randpixelelemente sind folgende: 0,912 mm, 0,916 mm, 0,917 mm, 0,919 mm. Die zuvor genannten Werte können jeweils für sich obere bzw. untere Grenzen von bevorzugten Bereichen bilden.

Die Zentralpixelelemente können eine Breite von zwischen 0,950 mm und 0,970 mm aufweisen. Weitere vorteilhafte Breiten der Zentralpixelelemente sind folgende: 0,955 mm, 0,960 mm, 0,965 mm, 0,966 mm. Die zuvor genannten Werte können jeweils für sich obere bzw. untere Grenzen von bevorzugten Bereichen bilden.

Der Interrandpixelabstand kann zwischen 0,40 mm und 0,70 mm betragen. Weitere vorteilhafte Werte sind folgende: 0,45 mm, 0,55 mm, 0,60 mm, 0,65 mm. Die zuvor genannten Werte können jeweils für sich obere bzw. untere Grenzen von bevorzugten Bereichen bilden.

Zum Beispiel beträgt der Abstand a von zwei benachbarten Pixeln innerhalb desselben Sensorelementes 50 $\mu$m. Zwei benachbarte Pixel können benachbarte Randpixelelemente, benachbarte Zentralpixelelemente oder ein von einem Zentralpixelelement benachbartes Randpixelelementes sein. Zwischen zwei benachbarten Platinen, auf denen die Sensorelemente aufgebracht sind, kann ein Abstand zwischen den Stoßkanten von manchmal 0,15 mm vorgesehen sein. Die Randpixelelemente können mit einem Abstand von 0,2 mm vom Platinenrand aufgebracht sein. Der Abstand von zwei benachbarten Pixeln innerhalb desselben Sensorelementes kann auch 25 $\mu$m sein oder jeder beliebige Wert von 25 $\mu$m bis 75 $\mu$m. Weitere vorteilhafte Werte des Abstandes zwischen den Stoßkanten sind 0,3 mm, 0,2 mm 0,1 mm. Die zuvor genannten Werte können jeweils für sich obere bzw. untere Grenzen von bevorzugten Bereichen bilden.

Die Randpixelelemente können auch in folgenden Abstand vom Platinenrand aufgebracht sein: 0,3 mm oder 0,1 mm. Die zuvor genannten Werte können jeweils für sich obere bzw. untere Grenzen von bevorzugten Bereichen bilden.

Durch die zuvor beschriebenen Werte können sich auch die nachfolgenden vorteilhaften Werte ergeben. Der Interzentralpixelabstand kann zwischen 7,728 mm und 11,592 mm betragen. Weitere vorteilhafte Werte sind folgende: 9,66 mm, 8,00 mm, 10 mm. Die zuvor genannten Werte können jeweils für sich obere bzw. untere Grenzen von bevorzugten Bereichen bilden. Der Wert von 9,66 mm kann sich ergeben, wenn 10 Randpixelelemente vorgesehen sind, der Wert von 11,592 mm kann sich ergeben wenn 12 Randpixelelemente vorgesehen sind, der Wert von 7,728 mm kann sich ergeben wenn 8 Randpixelelemente vorgesehen sind.

Es ist auch günstig, wenn die erste und/oder zweite Platine Bauelemente zur Signalverarbeitung aufweist, sodass ein erstes bzw. zweites Sensormodul gebildet wird.

Gemäß eines nebengeordneten Aspektes der Erfindung gibt diese zudem ein Verfahren zu Darstellung von Detektionssignalen an. Dieses Verfahren wird z.B. bei dem zuvor beschriebenen Detektor durchgeführt. Das Verfahren weist folgenden Schritt auf: Verarbeitung der Sensorsignale der Randpixelelemente derart, dass in einer visuellen Darstellung, das jeweilige dargestellte Pixel, welches den Randpixelelementen entspricht, in dessen Dimension auf die Dimension der dargestellten Pixel, welche den Zentralpixelementen entsprechen, angepasst wird. Die Anpassung kann zum Beispiel eine Multiplikation mit dem Faktor b/c sein, wobei b und c den weiter oben beschriebenen Variablen entspricht.

Durch dieses Verfahren können Artefakte, die durch den bauartbedingten größeren Zwischenraum zwischen zwei benachbarten Sensorelementen, im Verhältnis zu dem Abstand zwischen benachbarten Pixelelementen innerhalb eines Sensorelements entstehen, kompensiert werden.

Weitere vorteilhafte Ausgestaltungen der Erfindung werden nachfolgend anhand von Ausführungsbeispielen in Verbindung mit der Zeichnung beschrieben. In dieser zeigen:

Figur 1     einen schematischen Aufbau, bei dem zwei Detektormodule mit einer Mehrzahl von Sensorelementen nebeneinander angeordnet sind;

Figur 2     eine Detailansicht von Pixelelementen von nebeneinander angeordneten ersten und zweiten Sensorelementen sowie eine schematische Darstellung von nach der Signalverarbeitung generierten, visualisierten Pixeln;

Figur 3     zwei nebeneinander angeordnete Detektormodule, die eine Ausgestaltung zeigen, welche zum Verständnis der Erfindung hilfreich ist;

Figur 4     eine schematische Ansicht eines Ausführungsbeispiels eines erfindungsgemäßen Detektors;

Figur 5     das rechte von den in Figur 4 dargestellten Sensorelementen;

Figur 6     in Längsrichtung die komplette Pixelanordnung des rechten Sensorelementes aus Figur 4; und

Figur 7     ein Berechnungsbeispiel für die Breite der Randpixel für identisch breite Randpixel.

Figur 8     ein weiteres Berechnungsbeispiel für die Breite der Randpixel für identisch breite Randpixel, wobei die Sensorelemente auf zwei verschiedene Platinen verteilt sind.

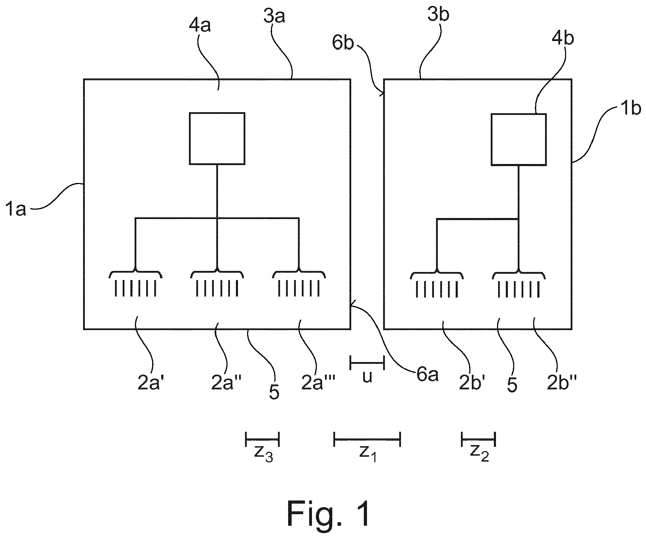

In Figur 1 ist mit Bezugszeichen 1a ein erstes Detektormodul, sowie mit Bezugszeichen 1b ein zweites Detektormodul dargestellt. Das erste Detektormodul 1a weist, wie schematisch durch die geflügelten Klammern dargestellt, drei Sensorelemente: 2a', 2a'', 2a''' auf. Diese Sensorelemente sind nachfolgend, weil sie in dem ersten Detektormodul 1a vorgesehen sind, als erstes Sensorelement 2a', 2a'', 2a''' bezeichnet. Das zweite Detektormodul 1b weist in dem Ausführungsbeispiel nur zwei Sensorelemente: 2b', 2b'' auf, die nachfolgend als zweite Sensorelemente bezeichnet werden. Diese Sensorelemente sind jeweils auf einer Platine 3a, 3b angeordnet. Hierbei ist die Platine mit dem Bezugszeichen 3a als erste Platine bezeichnet, da sie in dem ersten Detektormodul ausgebildet ist, und die Platine mit Bezugszeichen 3b als zweite Platine bezeichnet, da sie in dem zweiten Detektormodul ausgebildet ist. Auf den Platinen 3a, 3b ist jeweils eine Signalverarbeitungsfunktionalität 4a, 4b vorgesehen. Diese kann einen AD Wandler, verschiedene Halbleiter-Bauelemente, und/oder Speicherelemente enthalten. Durch die Integration der Signalverarbeitungsfunktionalität 4a, 4b auf den entsprechenden Platinen 3a, 3b, kann ein großer Detektor aus einer Vielzahl von einzelnen Detektormodulen aufgebaut werden.

In dem vorliegenden Beispiel aus Figur 1 sind lediglich zwei nebeneinander angeordnete Detektormodule 3a, 3b dargestellt. Es können auch drei und mehr Detektormodule in einer Linie nebeneinander angeordnet sein. So wird beispielsweise ein Zeilendetektor gebildet.

Die einzelnen Sensorelemente 2a', 2a'', 2a''', 2b', 2b'' in den entsprechenden Detektormodulen 1a, 1b weisen jeweils für sich eine Vielzahl von schematisch als Strichen dargestellten Pixelelementen auf. Ein solches Pixelelement wird als ein wirksamer Bereich gesehen, in denen ein entsprechendes Signal von der eintretenden Strahlung generiert wird.

Im vorliegenden Beispiel sind die Pixelelemente durch eine Halbleiterschicht gebildet.

Beispielsweise weist ein Sensorelement für Röntgenstrahlung einen Szintillator auf, in dem eintreffende Röntgenstrahlung in sichtbares Licht umgewandelt wird. Dieses sichtbare Licht wird dann beispielsweise in einer Fotodiode detektiert. Diese Fotodiode ist zum Beispiel aus verschiedenen Pixeln aufgebaut.

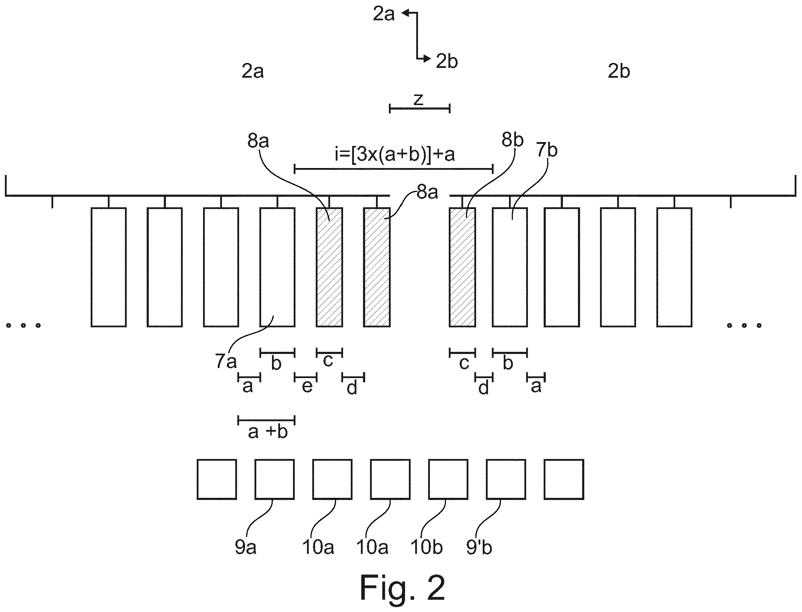

Im dargestellten Beispiel sind die einzelnen Pixelelemente in den Sensorelementen lediglich in Reihe hintereinander angeordnet, sodass die einzelnen Sensorelemente 2a, 2a', 2a'', 2a''', 2b, 2b', 2b'', 2b''' einen linearen Sensor bilden, und die einzelnen Detektormodule 3a, 3b demnach einen linearen Detektor bilden, bei dem in einer einzigen Linie eine Vielzahl von Pixelelementen hintereinander angeordnet sind. Hierbei sind die Bezugszeichen 2a, 2b lediglich in Figur 2 dargestellt und die Bezugszeichen 2a', 2a'', 2a''' 2b', 2b'', 2b''' lediglich in Figur 1 dargestellt.

Soweit vorliegend auf die lineare Anordnung abgestellt wird, ist zudem nicht ausgeschlossen, dass zusätzlich zu dieser Linie aus einzelnen Pixelementen noch in einer weiteren Richtung nebeneinander Pixelemente vorgesehen sind, sodass beispielsweise ein Flächendetektor gebildet wird. Die erfindungsgemäße Ausgestaltung innerhalb der Linien kann auch auf benachbarte Linien in einem Flächendetektor angewandt werden. Günstig ist es jedoch, dass nur eine oder insbesondere zwei Linien von Pixeln gebildet werden.

Bauartbedingt sind sowohl zwischen benachbarten Sensorelementen 2a, 2a', 2a'', 2a''', 2b, 2b'', 2b''' von einem gemeinsamen Detektormodul 1a, 1b, als auch zwischen benachbarten Sensorelementen 2a, 2a', 2a'', 2a''', 2b, 2b'', 2b''' von unterschiedlichen Detektormodulen 1a, 1b Abstände ausgebildet, die größer sind als die Abstände zwischen den einzelnen Pixelementen innerhalb eines Sensorelementes.

In dem Ausführungsbeispiel aus Figur 1 ist mit z3 beziehungsweise z2 ein sogenannter Interrandpixelabstand z zwischen Randpixeln R, 8a, 8b von benachbarten Sensorelementen innerhalb eines Detektormoduls bezeichnet und mit z1 der Interrandpixelabstand z zwischen Randpixeln von benachbarten Sensorelementen von zwei benachbarten Detektormodulen. Insbesondere ist mit z3 der Interrandpixelabstand zwischen den Randpixeln der Sensorelemente mit den Bezugzeichen 2a'' und 2a''' bezeichnet, und mit z2 der Interrandpixelabstand zwischen den Randpixeln von den Sensorelementen mit den Bezugzeichen 2b', 2b''. Mit z1 ist der Interrandpixelabstand zwischen den Randpixeln der Sensorelemente mit den Bezugzeichen 2a''' und 2b' bezeichnet. Diese zuvor bezeichneten Interrandpixelabstände z können innerhalb eines Moduls gleich oder auch unterschiedlich sein. Die Interrandpixelabstände zwischen zwei Modulen können für alle linear hintereinander angeordneten Module gleich oder ebenfalls unterschiedlich sein.

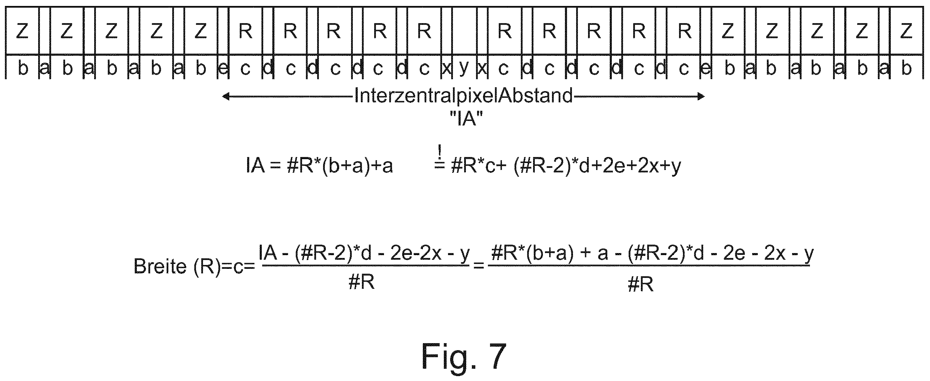

Hierbei sind ist das Bezugzeichen R lediglich in Figur 7 dargestellt und bezeichnet die Randpixel.

In Figur 1 ist darüber hinaus mit Bezugzeichen k ein Kantenabstand zwischen benachbarten Kanten 6a, 6b des ersten Detektormoduls 1a und des zweiten Detektormoduls 1b bezeichnet. Zusätzlich zu der Tatsache, dass konstruktions- und produktionsbedingt das Randpixel von demjenigen Sensorelement, das an die Kante 6a, 6b angrenzt, einen größeren Abstand zu der Kante hat als der Abstand zwischen zwei benachbarten Pixelementen innerhalb eines Sensorelements, ist es bauartbedingt auch nicht immer möglich die beiden Kanten von benachbarten Detektormodulen unmittelbar auf Stoß zu legen. Hier wird konstruktionsbedingt immer ein minimaler Zwischenraum, zum Beispiel im Millimeter Bereich, sein. Mögliche Zwischenräume zwischen benachbarten Kanten sind folgende: 0,10 mm, 0,15 mm, 0,2 mm, 0,3 mm. Die zuvor genannten Werte können jeweils für sich obere bzw. untere Grenzen von bevorzugten Bereichen bilden.

Deshalb ist der Interrandpixelabstand von zwei benachbarten Randpixeln 8a, 8b von Sensorelementen in unterschiedlichen Detektormodulen oftmals größer als der Interrandpixelabstand zwischen Randpixeln von benachbarten Sensorelementen innerhalb eines Detektormoduls. Dadurch können in der visualisierten Darstellung nach Signalverarbeitung der detektierten Signale unerwünschte Artefakte erzeugt werden.

Deshalb schlägt die vorliegende Erfindung z.B. vor, in einem Zwischenraum zwischen zueinander am nächsten liegenden Zentralpixelelementen Z, 7a, 7b von nebeneinander angeordneten Sensorelementen 2a, 2b (vgl. Figur 2) Randpixel 8a, 8b vorzusehen, die eine Breite aufweisen, welche geringer ist als die Breite der sogenannten Zentralpixel 7a, 7b. Hierbei sind ist das Bezugzeichen Z lediglich in Figur 7 dargestellt und bezeichnet die Zentralpixel.

So entsprich z.B. ein Interzentralpixelabstand von zueinander am nächsten liegenden ersten und zweiten Zentralpixelelemente der nebeneinander angeordneten Sensorelemente folgender Formel 1:

$$(\text{Formel 1})$$

$$i = n^*(a+b) + a,$$

wobei i der Interzentralpixelabstand, n eine natürliche Zahl, a der erste vorbestimmte im Wesentlichen äquidistanten Abstand, und b die jeweiligen Breite der Zentralpixelelemente (7a) ist.

Somit entspricht der Interzentralpixelabstand z.B. dem ersten vorbestimmten im Wesentlichen äquidistanten Abstand aufsummiert mit dem Wert der sich ergibt aus einem ganzzahligen Vielfachen der Summe aus dem ersten vorbestimmten im Wesentlichen äquidistanten Abstand und der jeweiligen Breite der Zentralpixelelemente.

Die Zentralpixel sind Pixel, die im Gegensatz zu den Randpixeln eben nicht an den entsprechenden Rändern liegen, an denen zwei Sensorelementen enden.

Ein Beispiel eines erfindungsgemäßen Detektors ist in Figur 2 gezeigt. In der oberen Hälfte von Figur 2, in der die länglichen Boxen dargestellt sind, sind schematisch die einzelnen Pixelemente 7a, 8a, 7b, 8b dargestellt, wie sie zum Beispiel auf der Oberfläche einer Platine aufgebracht sind.

In der unteren Hälfte von Figur 2 sind mit den quadratischen Elementen die nach Signalverarbeitung dargestellten visualisierten Pixel 9a, 9b, 10a, 10b dargestellt. Das heißt, obwohl die Zentralpixelelemente 7a, 7b eine Zentralpixelbreite b ausweisen, die größer ist als eine Randpixelbreite c, die der Breite der Randpixel 8a, 8b entspricht, weisen im visualisierten Bild die entsprechenden visualisierten Pixel 9a, 9b die den Zentralpixelelementen 7a, 7b entsprechen, die selbe Größe auf wie die entsprechenden visualisierten Pixel 10a, 10b, die den Randpixelelementen 8a, 8b entsprechen. Somit kann der "blinde Bereich" zwischen zwei benachbarten Sensorelementen kompensiert werden.

In Figur 2 ist auf der linken Seite das erste Sensorelement 2a dargestellt, und auf der rechten Seite das zweite Sensorelement 2b. Dieses wird durch die Pfeile in der Figur 2 am oberen Rand schematisch angedeutet.

In Figur 2 sind mit Bezugszeichen 8a die Randpixelelemente des ersten Sensorelements 2a bezeichnet, diese werden nachfolgend als erste Randpixelelemente definiert. Das Randpixelelement des zweiten Sensorelements 2d ist als zweites Randpixelelement 8b bezeichnet. Die Zentralpixelelemente des ersten Sensorelements 2a sind mit Bezugszeichen 7a markiert und werden nachfolgend als erste Zentralpixelelemente bezeichnet, und die Zentralpixelelemente des zweiten Sensorelements 2b sind mit Bezugszeichen 7b markiert und werden nachfolgend als zweite Zentralpixelelemente bezeichnet.

Durch die in Figur 2 dargestellten Punkte wird angedeutet, dass die Sensorelemente 2a, 2b mehr als die in der Figur dargestellten Pixelelemente enthalten können. Jedes Sensorelement kann Pixelelemente enthalten, die in einem Streifen zueinander angeordnet sind, sodass lediglich an einem einzigen Rand die relativ gesehen im Verhältnis zu den Zentralpixeln schmaleren Randpixel angeordnet sind. Diese Randpixel können aber auch an beiden Rändern der Pixelgruppe vorgesehen sein.

In Figur 2 sind zwei erste Randpixelelement 8a mit einer im Verhältnis zu den Zentralenpixeln schmaleren Pixelbreite c vorgesehen, und in dem zweiten Sensorelement 2b ist lediglich ein einziges zweites Randpixelelement 8b vorgesehen. In der Figur ist die Breite der Randpixelelemente mit c bezeichnet, die Breite der Zentralpixelelemente mit b bezeichnet.

Der Abstand zwischen zwei benachbarten Zentralpixelelementen ist in der Figur mit a bezeichnet, der Abstand zwischen zwei benachbarten Randpixelelementen innerhalb eines Sensorelements ist in der Figur mit d bezeichnet. Der sogenannte Interrandpixelabstand zwischen Randpixelelementen von benachbarten Sensorelementen ist mit z bezeichnet. Zusätzlich ist in der Figur mit Bezugszeichen e beziehungsweise f ein Abstand zwischen zwei benachbarten Pixeln eines Sensorelements, wobei eines der Pixel ein Zentralpixel und das andere der Pixel ein Randpixel ist, bezeichnet.

Im vorliegenden Ausführungsbeispiel sind die Abstände zwischen den benachbarten ersten Zentralpixelelementen 7a des ersten Sensorelements 2a und auch zwischen den benachbarten zweiten Zentralpixelelementen 7b des zweiten Sensorelements 2b gleich. Diese Abstände zwischen benachbarten Zentralpixeln sind jeweils auch zwischen zwei Sensorelementen gleich.

Die Abstände zwischen einem Zentralpixel und einem zu diesem benachbarten Randpixel in dem ersten Sensorelement 2a und auch in dem zweiten Sensorelement 2b (vgl. Bezugszeichen e bzw. f) entsprechen ebenfalls dem Abstand a zwischen zwei Zentralpixeln und der Abstand e zwischen zwei benachbarten Randpixelelementen innerhalb eines Sensorelements entspricht ebenfalls dem Abstand a zwischen zwei Zentralpixelelementen.

Somit ist in dem vorliegenden Ausführungsbeispiel der Abstand zwischen jeweils benachbarten Pixelelementen innerhalb eines Sensorelements im Wesentlichen immer konstant. Es kann jedoch auch sein, dass Abstände zwischen einem Zentralpixelelement und einem zu diesem benachbarten Randpixelelement innerhalb desselben Sensorelements unterschiedliche zu den Abständen zwischen benachbarten Zentralpixelelementen innerhalb eines Sensorelementes ist. Auch kann der Abstand zwischen zwei benachbarten Randpixelelementen innerhalb desselben Sensorelements unterschiedlich zu den Abständen zwischen benachbarten Zentralpixelelementen innerhalb eines Sensorelementes sein.

Es ist jedoch günstig, dass innerhalb eines Sensorelements der Abstand zwischen allen benachbarten Pixelelementen gleich ist.

Wie in der Figur 2 dargestellt, entspricht ein sogenannter Intrazentralpixelabstand, das heißt ein Abstand von zueinander am nächsten liegenden Zentralpixelelementen von nebeneinander angeordneten Sensorelementen, der zuvor bereits diskutierten Formel 1.

In Figur 2 ist die natürliche Zahl n der Formel 1 Drei und i entspricht daher 3*(a+b) + a.

Innerhalb dieses Intrazentralpixelabstands i liegen insgesamt drei Randpixelelemente 8a, 8b, die im Verhältnis zu den Zentralpixelelementen schmaler ausgebildet sind.

Die Tatsache, dass die Anzahl der Randpixelelemente 8a, 8b der natürlichen Zahl der Formel 1 entspricht, ist nicht notwendig für die Erfindung, jedoch vorteilhaft für diese. So können nämlich, wie unten in Figur 2 dargestellt, die visualisierten Pixel 10a, 10b, die aus den Randpixelelemente 8a, 8b resultieren, einfach in sequenzieller und äquidistanter Abfolge zwischen den visualisierten Pixeln 9a, 9b, die aus den Zentralpixelelementen 7a, 7b resultieren, angeordnet werden, und so eine homogene Visualisierung erzeugt werden.

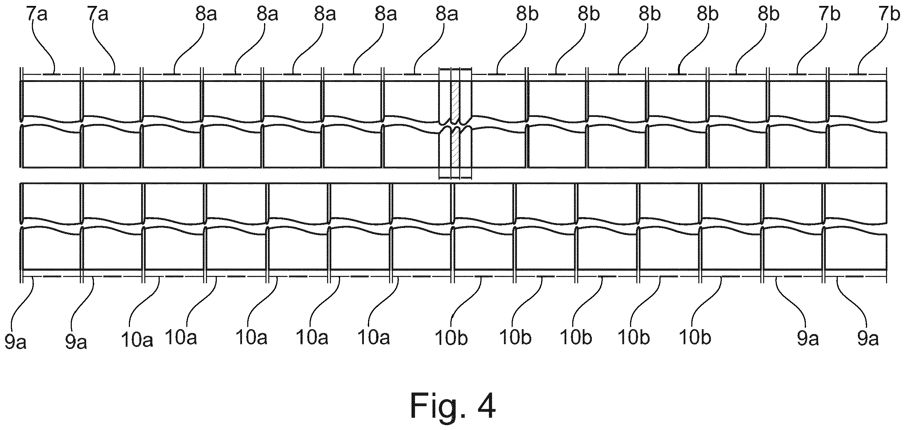

Die Anzahl der im Verhältnis zu den Zentralpixelelementen schmaleren Randpixelelemente in jedem Sensorelement ist nicht beschränkt. Diese kann jeweils für benachbarte Sensorelemente unterschiedlich oder auch gleich sein. So ist zwar in dem vorliegenden Ausführungsbeispiel aus Figur 2 die Anzahl der Randpixelelemente in den benachbarten Sensorelementen unterschiedlich, nämlich zwei in dem ersten Sensorelement 2a und eins in dem zweiten Sensorelement 2b. In den Ausführungsbeispielen in Figuren 4 bis 6 jedoch sind beispielsweise insgesamt 10 Randpixelelemente vorgesehen, wobei jeweils beidseitig 5 Randpixelelemente zu einem Sensorelement gehören. Demnach entspricht in diesem vorteilhaften Ausführungsbeispiel der Figuren 4 bis 6 die Summe der ersten Randpixelelemente 8a der Summe der zweiten Randpixelelemente 8b. Andere vorteilhafte Werte von Anzahlen von Randpixeln sind 2, 3, 4, 5, 6, 7, 8, 9, 11, 12, 13, 14, 20, 25 sein. Diese Werte können jeweils für sich eine obere bzw. untere Grenze bilden.

Als Zentralpixelelemente werden diejenigen Pixel bezeichnet, die jedenfalls nicht an den Rändern des Sensorelements liegen, welche nebeneinander angeordnet sind, sodass sich eine lineare Pixelanordnung ergibt.

Die Ausgestaltung mit den im Verhältnis zu den Zentralpixelelementen schmaleren Randpixelelementen kann den bauartbedingten Abstand zwischen zwei Sensorelementen auf einer gemeinsamen Platine, das heißt in einem gemeinsamen Detektormodul, kompensieren oder aber auch den Abstand, der bauartbedingt vorgesehen ist, wenn die jeweiligen nebeneinander liegenden Sensorelemente, Sensorelemente von unterschiedlichen Detektormodulen sind, wie es durch den Abstand z1 in Figur 1 dargestellt ist.

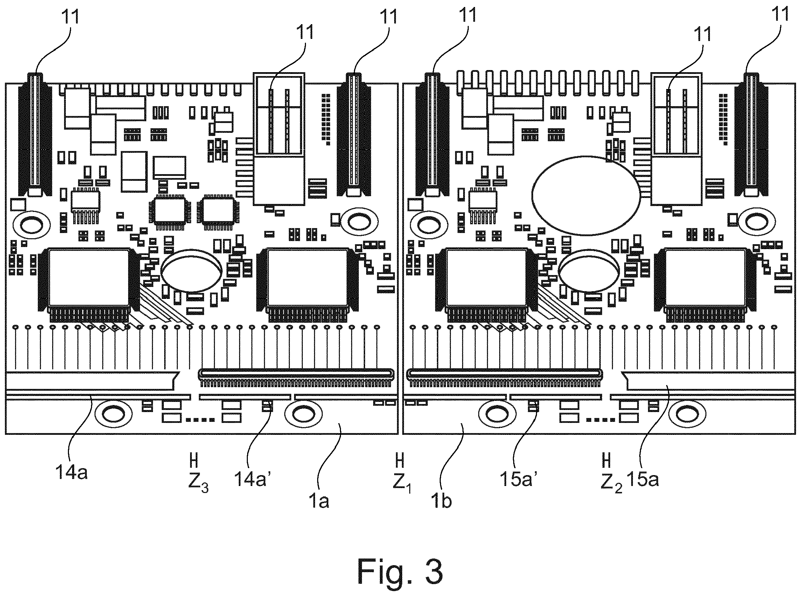

In Figur 3 ist eine schräge Aufsicht auf zwei nebeneinander montierte Detektormodule 1a, 1b dargestellt. Diese Detektormodule sind Module in denen die Randpixel nicht, wie in der Erfindung im Vergleich zu den Zentralpixelelementen schmaler ausgebildet sind. Diese Ansicht ist zum leichteren Verständnis der Erfindung beschrieben, da ansonsten auch die erfindungsgemäßen Detektormodule so ausgebildet sein können, wie es in Figur 3 zu sehen ist. Hierin ist zu erkennen, dass auf dem ersten Detektormodul 1a zwei Fotozellen 14a, 14a' vorgesehen sind, wobei jede dieser Fotozellen einem Sensorelement entspricht und jedes dieser Sensorelemente, was in den Figuren nicht zu erkennen ist, aus einer Vielzahl von hintereinander angeordneten Pixelelementen aufgebaut ist. Auch auf dem zweiten Detektormodul 1b sind zwei Fotozellen 14a, 14a' vorgesehen.

Auch in dieser Figur ist ein Interpixelabstand zwischen Randpixelelementen von benachbarten Sensorelementen von den zwei benachbarten Detektormodulen mit z1 bezeichnet, und ein Interrandpixelabstand zwischen Randpixelelementen von benachbarten Sensorelementen, innerhalb eines Detektormoduls, mit z2 beziehungsweise z3.

Die Pixelelemente verlaufen in einer Reihe, im Wesentlichen parallel zu einer Kante der Platinen 3a, 3b und in einem Abstand x von der Kante. In einem von der Kante aus gesehenen distalen Bereich der Pixelelemente ist die Steuer- und Verarbeitungselektronik angeordnet. Die entsprechenden Elemente, die mit Bezugszeichen 11 bezeichnet sind, stellen Stecker Elemente dar, über die die Module angeschlossen werden können.

Figur 4 zeigt eine schematische Ansicht einer alternativen Ausführungsform, bei der insgesamt 10 Randpixelelemente 8a, 8b vorgesehen sind, die beidseitig von Zentralpixelelementen 7a, 7b umgeben werden. Vorliegend sind auf jeder Seite in Längsrichtung nur zwei Zentralpixelelemente 7a, 7b dargestellt. Das Sensorelement ist jedoch in Längsrichtung weiter ausgedehnt als dort dargestellt, sodass mehr als diese zwei Zentralpixelelemente in jedem Sensorelement vorgesehen sind.

Vorteilhafte Anzahlen von Zentralpixelelementen innerhalb eines Sensorelementes sind Folgende: 22, 54, 118 für jeweils 10 Randpixel. Diese Werte können jeweils für sich obere und untere Grenzen bilden.

Günstige Anzahlen an Randpixelelementen sind 20, 10, 15, 5. Diese Werte können jeweils für sich obere und untere Grenzen bilden.

Dementsprechend beträgt das Vielfache der Summe aus dem ersten vorbestimmten, im Wesentlichen äquidistanten Abstand und der Breite der Zentralpixelelemente eben vorzugsweise die zuvor genannten Werte.

In dem Beispiel aus Figur 4, sind die Randpixel 0,916 mm breit. Weitere vorteilhafte Breiten der Randpixelelemente sind folgende: 0,912 mm, 0,916 mm, 0,917 mm, 0,919 mm. Die zuvor genannten Werte können jeweils für sich obere bzw. untere Grenzen von bevorzugten Bereichen bilden.

In dem vorliegenden Ausführungsbeispiel aus Figur 4 weisen die Zentralpixelelemente eine Breite von 0,966 mm auf. Weitere vorteilhafte Breiten der Zentralpixelelemente sind folgende: 0,955 mm, 0,960 mm, 0,965 mm, 0,966 mm. Die zuvor genannten Werte können jeweils für sich obere bzw. untere Grenzen von bevorzugten Bereichen bilden.

Der Intrarandpixelabstand zwischen einander benachbarten Randpixelementen beträgt in dem Beispiel aus Figur 4 insgesamt 0,55 mm. Weitere vorteilhafte Werte sind folgende: 0,40 mm, 0,60 mm, 0,70 mm. Die zuvor genannten Werte können jeweils für sich obere bzw. untere Grenzen von bevorzugten Bereichen bilden.

Im vorliegenden Beispiel beträgt der Board-Abstand bauartbedingt 0,15 mm. Weitere vorteilhafte Werte sind Folgende: 0,10 mm oder 0,20 mm. Die zuvor genannten Werte können jeweils für sich obere bzw. untere Grenzen von bevorzugten Bereichen bilden.

Der Abstand eines Randpixels zu der jeweiligen Kante des Detektormoduls beträgt vorliegend für beide Module 0,20 mm. Weitere vorteilhafte Werte sind Folgende: 0,10 mm oder 0,30 mm. Die zuvor genannten Werte können jeweils für sich obere bzw. untere Grenzen von bevorzugten Bereichen bilden. Die Abstände zwischen dem Randpixel zu der Kante können auch für unterschiedliche Module variieren.

In dem unteren Teil in Figur 4 ist die visualisierte Darstellung der von den Zentral- bzw. Randpixelelementen akquirierten Daten zu sehen. Dort ist zu sehen, dass in der Darstellung alle Pixelelemente dieselbe Breite aufweisen, nämlich die Breite der Zentralpixel von 0,966 mm. Diese Breite ist willkürlich gewählt und in der Visualisierung kann auch jede andere Breite dargestellt werden. In der Figur 4 sind mit Bezugszeichen 9a, 9b die visualisierten Pixel resultierend von den Zentralpixeln dargestellt, und mit Bezugszeichen 10a, 10b die visualisierten Pixel resultierend von den Randpixeln.

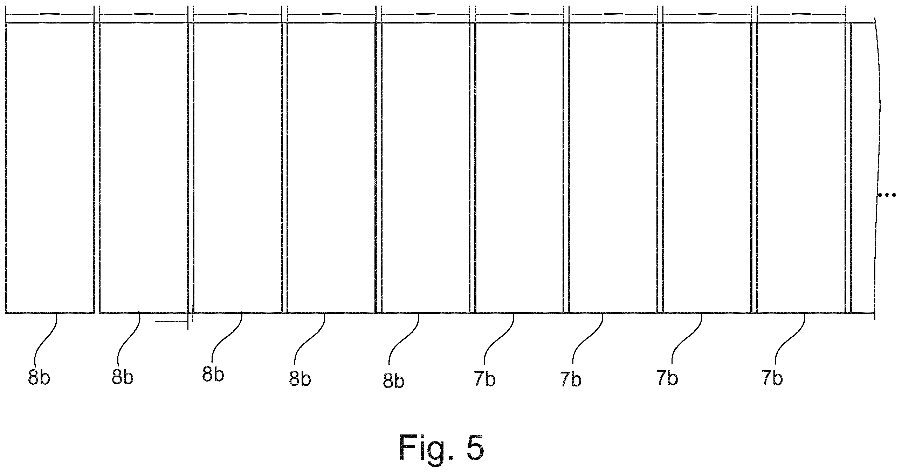

In Figur 5 ist lediglich das rechte von den in Figur 4 dargestellten Sensorelementen dargestellt. Hierin ist des Weiteren zu erkennen, dass der Abstand zwischen zwei benachbarten Randpixeln 0,05 mm beträgt. Weitere vorteilhafte Werte sind Folgende: 0,03 mm, 0,04 mm, 0,06 mm, 0,07 mm. Die zuvor genannten Werte können jeweils für sich obere bzw. untere Grenzen von bevorzugten Bereichen bilden.

Vorliegend sind die Abstände zwischen benachbarten Zentralpixelelementen innerhalb eines Sensorelements, zwischen benachbarten Randpixelelementen innerhalb eines Sensorelements, und der Abstand zwischen einem Randpixelelement und einem zu diesem benachbarten Zentralpixelelement innerhalb eines Sensorelements derselbe. Diese Abstände können jeweils auch für sich variieren.

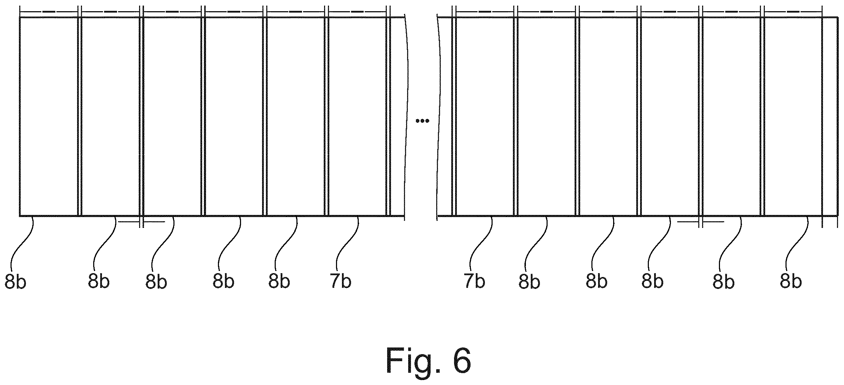

In Figur 6 ist beispielhaft in Längsrichtung die komplette Pixelanordnung des rechten Sensorelementes aus Figur 4 dargestellt.

Deshalb entspricht die auf der linken Seite in Figur 6 dargestellte Kante der linken Kante des rechten Sensorelements in Figur 4. Auf der rechten Seite in Figur 6 ist die entsprechend gegenüberliegende Endkante des Sensorelementes dargestellt. Wie hier zu sehen, sind die entsprechenden schmaleren Randpixel in beiden Randbereichen vorgesehen. Dies ist, wie zuvor beschrieben, nicht notwendigerweise der Fall und die schmaleren Randpixelelemente können auch nur an einer einzigen Randkante vorgesehen sein.

Die vorliegende Erfindung wurde für Pixelelemente von Fotodioden beschrieben. Die Ausgestaltung kann jedoch auch für alle weiteren beliebigen bekannten Pixelelemente angewandt werden. Ein Pixel ist z.B. jede aktive Fläche, die ein zu detektierendes Signal detektieren kann.

In Figur 7 ist beispielhaft die Berechnung der günstigsten Breite der Randpixel für 10 Randpixel zwischen zwei Zentralpixeln gezeigt. Hierbei ist zusätzlich zu Fig. 1 und 2 der Abstand z von zwei benachbarten Sensorelementen aufgeteilt in den Abstand x vom letzten Randpixel zum Ende des Sensorelements bzw. vom Rand des nächsten Sensorelements zum ersten Randpixel des nächsten Sensorelements und dem Abstand y zwischen zwei Sensorelementen.

Wenn, wie in Figur 7 gezeigt, die Breite c der Randpixelelemente der Sensorelemente identisch ist, berechnet sich die Breite c der Randpixel nach Formel 2:

(Formel 2)

$$c = \frac{\#R*(b+a) + a - (\#R-2)*d - 2e - 2x - y}{\#R}$$

wobei #R der Anzahl der Randpixelelemente in dem Zwischenraum zwischen den zueinander am nächsten liegenden ersten und zweiten Zentralpixelelementen der nebeneinander angeordneten Sensorelemente ist, a der erste vorbestimmte im Wesentlichen äquidistante Abstand ist, b die jeweiligen Breite der Zentralpixelelemente ist, d der zweite vorbestimmten im Wesentlichen äquidistante Abstand zwischen zwei benachbarten Randpixelelementen innerhalb des jeweiligen Sensorelements ist, e ein Abstand zwischen einem Randpixelelement und einem zu diesem benachbarten Zentralpixelelement innerhalb des jeweiligen Sensorelements ist, x ein Abstand zwischen einem Rand des Sensorelementes und dem zum Rand benachbarten Randpixelelement des jeweiligen Sensorelementes ist, und y der Abstand zwischen zwei benachbarten Sensorelementen ist.

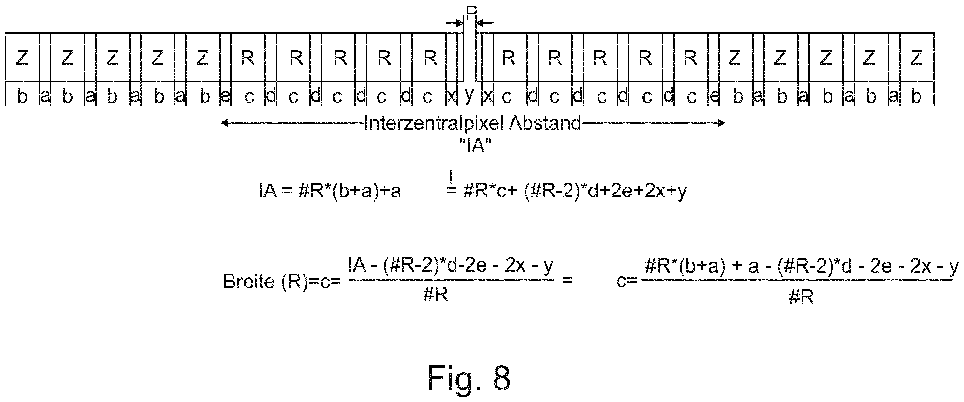

Soweit die benachbarten Sensorelemente auf zwei unterschiedlichen Platinen angeordnet sind, ergibt sich die Variable y in obiger Formel 2 aus der Summe des Abstandes von zwei benachbarten Platinen und zweimal dem Abstand des Sensorelementes vom Platinenrand. Dieser Sachverhalt ist in Figur 8 zu sehen. Dort ist mit x der Abstand des jeweiligen Randpixels zum dem diesem am nächsten liegenden Ende des Sensorelements bezeichnet, und mit P Abstand von zwei Platinen, das heißt der Abstand zwischen einer ersten Kante der ersten Platine zu einer zweiten Kante der zweiten Platine.

In Figur 8 ist nämlich eine Situation dargestellt, dass zwei benachbarte Sensorelemente auf zwei unterschiedlichen Platinen angeordnet sind; innerhalb der Strecke der Variablen y in obiger Formel 2 ist dann der Abstand der Platinen zueinander mit "P" gekennzeichnet.

Neben dem Detektor selbst gibt die Erfindung auch ein Verfahren zur Darstellung von Detektionssignalen an. Dieses Verfahren wird z.B. bei dem erfindungsgemäßen Detektor angewandt. Hierzu werden die Sensorsignale der Randpixelelemente derart verarbeitet, dass in einer visualisierten Darstellung die jeweiligen dargestellten Pixel, welche den Randpixelelementen entsprechen, auf die Dimension der dargestellten Pixel, welche den Zentralpixelelementen entsprechen, angepasst wird.

**Bezugszeichenliste**

| 1a | erstes Detektormodul |
|---|---|
| 1b | zweites Detektormodul |
| 2a, 2a', 2a", 2a'" | erstes Sensorelement |
| 2b, 2b', 2b" | zweites Sensorelement |
| 3a, 3b | Platine |
| 4a, 4b | Signalverarbeitungsfunktionalität |
| 5 | Pixelelemente |
| 6a, 6b | Kante |
| Z, 7a, b | Zentralpixelelemente |
| R, 8a, b | Randpixelelemente |
| 9a,b | visualisierte Pixel resultierend von den Zentralpixeln |
| 10a, 1b | visualisierte Pixel resultierend von den Randpixeln |
| 11 | Steckerelemente |
| 14a, 14a', 15a, 15a' | Fotozellen bzw. Photodioden Element oder Sensorelement |
| b | Zentralpixelbreite |
| c | Randpixelbreite |
| k | Kantenabstand |
| d | Abstand von zwei benachbarten Randpixelelementen |
| z | Intrarandpixelabstand |
| i | Intrazenralpixelabstand |
| z3, z2 | Interpixelabstand zwischen Randpixelelementen von benachbarten Sensorelementen innerhalb eines Detektormoduls |
| z1 | Interpixelabstand zwischen Randpixelelementen von benachbarten Sensorelementen von zwei benachbarten Detektormodulen |
| P | Abstand von zwei Platinen zueinander |
| x | Abstand des Randpixel zum dem diesem am nächsten liegenden Ende des Sensorelements |
| y | Abstand von zwei Sensorelementen |
| P | Abstand von zwei Platinen |

**Patentansprüche**

1. Detektor mit einem ersten Sensorelement (2a, 2a', 2a", 2a'"), welches eine Mehrzahl von linear hintereinander angeordneten ersten Pixelelementen (7a, 8a) aufweist, und einem zweiten Sensorelement (2b, 2b', 2b",2b'"), welches eine Mehrzahl von linear hintereinander angeordneten zweiten Pixelelementen (7b, 8b) aufweist,

wobei das erste und zweite Sensorelement (2a, 2a', 2a", 2a'",2b, 2b', 2b",2b'"), nebeneinander montiert sind, sodass die zweiten Pixelelemente (7b, 8b) in einer Linie in Verlängerung zu den ersten Pixelelementen (7a, 8a) angeordnet sind,

dass die ersten Pixelelemente (7a, 8a) erste zentrale Pixelelemente (7a) mit einer ersten Breite (b) aufweisen, welche in einem ersten vorbestimmten im wesentlichen äquidistanten Abstand (a) zueinander linear hintereinander angeordneten sind, und

die zweiten Pixelelemente (7b, 8b) zweite zentrale Pixelelemente (7b) aufweisen mit einer zweiten Breite, welche der ersten Breite (b) entspricht, wobei die zweiten zentralen Pixelelemente (7b) in dem ersten vorbestimmten im Wesentlichen äquidistanten Abstand (a) zueinander linear hintereinander angeordneten sind, in dem die ersten zentralen Pixelelementen (7a) zueinander angeordnet sind, wobei eine Breite eines Pixelelementes der Dimension in Richtung der durch die hintereinander angeordneten Pixelelemente (7a, 8a, 7b, 8b) definierten Linie entspricht, und

wobei ein Interzentralpixelabstand (i) von zueinander am nächsten liegenden ersten und zweiten Zentralpixelelemente (Z, 7a, 8a) der nebeneinander angeordneten Sensorelemente (2a, 2a', 2a", 2a'",2b, 2b', 2b",2b'") folgender Formel 1 entspricht:

(Formel 1)

$$i = n*(a+b) + a,$$

wobei

i der Interzentralpixelabstand,

n eine natürliche Zahl,

a der erste vorbestimmte im Wesentlichen äquidistanten Abstand, und

b die jeweiligen Breite der Zentralpixelelemente (7a) ist,

**dadurch gekennzeichnet, dass**

in einem Zwischenraum zwischen den zueinander am nächsten liegenden ersten und zweiten Zentralpixelelementen (Z, 7a, 7b) der nebeneinander angeordneten Sensorelemente (2a, 2a', 2a", 2a''',2b, 2b', 2b",2b''') Randpixelelemente (R, 8a, 8b) vorgesehen sind, welche linear hintereinander und in Linie zu den ersten und zweiten Zentralpixelelementen (Z, 7a, 7b) angeordnet sind,

wobei die Randpixelelemente (R, 8a, 8b) eine dritte Breite aufweisen, welche geringer ist als die erste und zweite Breite der ersten und zweiten Zentralpixelelemente (Z, 7a, 7b).

2.  Detektor nach Anspruch 1, **dadurch gekennzeichnet, dass** in dem Zwischenraum zwischen den zueinander am nächsten liegenden ersten und zweiten Zentralpixelelementen (Z, 7a, 7b) der nebeneinander angeordneten Sensorelemente (2a, 2a', 2a", 2a''', 2b, 2b', 2b", 2b'''), eine derartige Anzahl von Randpixelelementen (R, 8a, 8b) vorgesehen ist, die der natürlichen Zahl n aus Formel 1 entspricht.

3.  Detektor nach Anspruch 1 oder 2, **dadurch gekennzeichnet, dass** die Randpixelelemente (R, 8a, 8b) durch erste und zweite Randpixel gebildet werden, wobei die ersten Randpixelelemente (8a) in Verlängerung zu den ersten Zentralpixelelementen (7a) in dem ersten Sensorelement (2a, 2a', 2a", 2a''') angeordnet sind, und die zweiten Randpixelelemente (8b) in Verlängerung zu den zweiten Zentralpixelelementen (7b) in dem zweiten Sensorelement (2b, 2b', 2b",2b''') angeordnet sind.

4.  Detektor nach Anspruch 3, **dadurch gekennzeichnet, dass** die ersten Randpixelelemente (8a) in einem zweiten vorbestimmten im Wesentlichen äquidistanten Abstand (d) zueinander linear hintereinander angeordneten sind, und die zweiten Randpixelelemente (8b) in dem zweiten vorbestimmten im Wesentlichen äquidistanten Abstand (d) zueinander linear hintereinander angeordneten sind, in dem die ersten Randpixelelemente (8a) zueinander angeordnet sind, wobei ein Interrandpixelabstand (z) von zueinander am nächsten liegenden ersten und zweiten Randpixelelementen der nebeneinander angeordneten Sensorelemente (2a, 2a', 2a", 2a''',2b, 2b', 2b",2b''') größer ist als der Abstand zwischen zwei zueinander benachbarten ersten bzw. zweiten Randpixelelementen (8a, 8b).

5.  Detektor nach Anspruch 3, **dadurch gekennzeichnet, dass** die Randpixel eine Breite c aufweisen, die sich nach Formel 2 ergibt zu

(Formel 2)

$$c = \frac{\#R\,(b+a) + a - (\#R-2)*d - 2e - 2x - y}{\#R}$$

wobei #R der Anzahl der Randpixelelemente (R, 8a, 8b) in dem Zwischenraum zwischen den zueinander am nächsten liegenden ersten und zweiten Zentralpixelelementen (Z, 7a, 7b) der nebeneinander angeordneten Sensorelemente (2a, 2a', 2a", 2a''',2b, 2b', 2b",2b''') ist,

a der erste vorbestimmte im Wesentlichen äquidistante Abstand ist,

b die jeweiligen Breite der Zentralpixelelemente (Z, 7a, 7b) ist,

d der zweite vorbestimmten im Wesentlichen äquidistante Abstand zwischen zwei benachbarten Randpixelelementen (R, 8a, 8b) innerhalb des jeweiligen Sensorelements (2a, 2a', 2a", 2a''',2b, 2b', 2b",2b''') ist,

e ein Abstand zwischen einem Randpixelelement (R, 8a, 8b) und einem zu diesem benachbarten Zentralpixelelement (7a) innerhalb des jeweiligen Sensorelements (2a, 2a', 2a", 2a''', 2b, 2b', 2b", 2b''') ist,

x ein Abstand zwischen einem Rand des Sensorelementes und dem zum Rand benachbarten Randpixelelement (R, 8a, 8b) des jeweiligen Sensorelementes ist,

und

y der Abstand zwischen zwei benachbarten Sensorelementen ist.

**6.** Detektor nach einem der Ansprüche 3 bis 5, **dadurch gekennzeichnet, dass** die Anzahl der ersten Randpixelelemente (8a) der Anzahl der zweiten Randpixelelemente (8b) entspricht.

**7.** Detektor nach einem der vorherigen Ansprüche, **dadurch gekennzeichnet, dass** 10 oder mehr Randpixel (8a, 8b) vorgesehen sind.

**8.** Detektor nach einem der vorherigen Ansprüche, **dadurch gekennzeichnet, dass** das die natürlichen Zahl n aus Formel 1 10 oder mehr ist.

**9.** Detektor nach einem der vorherigen Ansprüche 3 bis 7, **dadurch gekennzeichnet, dass** das erste und zweite Sensorelement (2a, 2a', 2a", 2a''',2b, 2b', 2b",2b''') auf einer gemeinsamen Platine (3a, 3b) angeordnet ist.

**10.** Detektor nach einem der vorherigen Ansprüche 3 bis 7, **dadurch gekennzeichnet, dass** das erste Sensorelement (2a, 2a', 2a", 2a''') auf einer ersten Platine (3a) angeordnet ist und das zweite Sensorelement (2b, 2b', 2b",2b''') auf einer zweiten Platine (3b) angeordnet ist, wobei die erste und zweite Platine (3a, 3b) im Wesentlichen auf Stoß nebeneinander angeordnet sind, sodass sich eine erste Kante (6a) der ersten Platine (3a) einer zweiten Kante (6b) der zweiten Platine (3b) derart gegenüberliegt, dass die Kanten (6a, 6b) senkrecht zu der durch die durch die hintereinander angeordneten Pixelelemente (7a, 8a, 7b, 8b) definierten Linie verläuft.

**11.** Detektor nach Anspruch 10 soweit von Anspruch 5 abhängig, **dadurch gekennzeichnet, dass** der Abstand zwischen der ersten Kante (6a) der ersten Platine (3a) und der zweiten Kante (6b) der zweiten Platine (3b) einem Wert P entspricht, und P kleiner oder gleicht dem Wert y in Formel 2 ist.

**12.** Detektor nach Anspruch 9, **dadurch gekennzeichnet, dass** der Abstand von dem der ersten Kante (6a) am nächsten liegenden ersten Randpixelelement (8a) zu der ersten Kante (6a) größer ist als der Abstand zwischen benachbarten ersten Randpixelelementen (8a) und/oder größer ist als der Abstand zwischen benachbarten ersten Zentralpixelelementen (7a), und/oder dass der Abstand von dem der zweiten Kante (6b) am nächsten liegenden zweiten Randpixelelement (8b) zu der zweiten Kante (6b) größer ist als der Abstand zwischen benachbarten zweiten Randpixelelementen (8b) und/oder größer ist als der Abstand zwischen benachbarten zweiten Zentralpixelelementen (7b).

**13.** Detektor nach Anspruch 10, **dadurch gekennzeichnet, dass** die Summe aus dem Abstand zwischen der ersten und zweiten Kante (6a, 6b), dem Abstand von dem der ersten Kante (6a) am nächsten liegenden ersten Randpixelelementes (8a) zu der ersten Kante (6a), und dem Abstand von dem der zweiten Kante (6b) am nächsten liegenden zweiten Randpixelelementes (8b) zu der zweiten Kante (6b), dem Interrandpixelabstand (i) entspricht.

**14.** Detektor nach einem der vorherigen Ansprüche, **dadurch gekennzeichnet, dass** die Randpixelelemente (8a, 8b) eine Breite von zwischen 0,910 mm und 0,920 mm, insbesondere 0,916 mm aufweisen, und/oder die Zentralpixelelemente (7a, 7b) eine Breite von zwischen 0,950 mm und 0,970 mm, insbesondere 0,966 mm aufweisen.

**15.** Detektor nach einem der vorherigen Ansprüche, **dadurch gekennzeichnet, dass** der Interrandpixelabstand (z) zwischen 0,40 mm und 0,70 mm beträgt, insbesondere 0,55 mm.

**16.** Detektor nach einem der vorherigen Ansprüche, **dadurch gekennzeichnet, dass** der Interzentralpixelabstand (i) zwischen 8,178 mm und 12,242 mm beträgt, insbesondere 10,21 mm .

**17.** Detektor nach einem der vorherigen Ansprüche 9 bis 11, **dadurch gekennzeichnet, dass** die erste und/oder zweite Platine (3a, 3b) Bauelemente zur Signalverarbeitung aufweist, sodass ein erstes bzw. zweites Sensormodul gebildet wird.

**18.** Verfahren zur Darstellung von Detektionssignalen eines Detektors nach einem der vorherigen Ansprüche mit dem Schritt der Verarbeitung der Sensorsignale der Randpixelelemente (8a, 8b) derart, dass in einer visuellen Darstellung, das jeweilige dargestellte Pixel, welches den Randpixelelementen (8a, 8b) entspricht, in dessen Dimension auf die Dimension der dargestellten Pixel, welche den Zentralpixelelementen (7a, 7b) entsprechen, angepasst wird.

Fig. 1

Fig. 2

EP 3 474 043 A1

Fig. 3

EP 3 474 043 A1

Fig. 4

EP 3 474 043 A1

Fig. 5

Fig. 6

Fig. 7

20

$$IA = \#R*(b+a)+a \overset{!}{=} \#R*c+ (\#R-2)*d+2e+2x+y$$

$$\text{Breite }(R)=c= \frac{IA - (\#R-2)*d-2e - 2x - y}{\#R} = \quad c= \frac{\#R*(b+a) + a - (\#R-2)*d - 2e - 2x - y}{\#R}$$

Fig. 8

EP 3 474 043 A1

**Europäisches Patentamt**
**European Patent Office**
**Office européen des brevets**

# EUROPÄISCHER RECHERCHENBERICHT

**Nummer der Anmeldung**

EP 18 19 5838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 545 899 A (TRAN NANG T [US] ET AL) 13. August 1996 (1996-08-13) * Spalte 8, Zeilen 11-30; Abbildungen 1,3,7,8 * ----- | 1-6,14, 15,18 | INV. G01T1/20 G01T1/24 |
| Y | DE 10 2010 051774 A1 (YXLON INT GMBH [DE]) 24. Mai 2012 (2012-05-24) * Absätze [0038], [0047], [0053] - [0056]; Abbildungen 1,5,6,8 * ----- | 1,9-13, 17,18 | |
| Y | DE 10 2012 202500 A1 (SIEMENS AG [DE]) 22. August 2013 (2013-08-22) * Absatz [0039]; Abbildungen 9,10,13 * ----- | 1,9-13, 17,18 | |
| Y | DE 10 2012 224209 A1 (SIEMENS AG [DE]) 10. Juli 2014 (2014-07-10) * Absatz [0015]; Abbildungen 9-13 * ----- | 1 | |
| A | JP 2010 243394 A (TELE SYSTEMS KK) 28. Oktober 2010 (2010-10-28) * Absätze [0012], [0023], [0028] - [0032]; Abbildungen 3,5-9 * ----- | 14-16 | |

**RECHERCHIERTE SACHGEBIETE (IPC)**

G01T

Der vorliegende Recherchenbericht wurde für alle Patentansprüche erstellt

| Recherchenort | Abschlußdatum der Recherche | Prüfer |
|---|---|---|
| Den Haag | 5. März 2019 | Van Ouytsel, Krist'l |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 5838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2019

| Im Recherchenbericht angeführtes Patentdokument | Datum der Veröffentlichung | Mitglied(er) der Patentfamilie | Datum der Veröffentlichung |
|---|---|---|---|
| US 5545899 A | 13-08-1996 | CA 2135363 A1 | 07-06-1995 |
| | | DE 69410959 D1 | 16-07-1998 |
| | | DE 69410959 T2 | 14-01-1999 |
| | | EP 0657938 A1 | 14-06-1995 |
| | | JP H07209430 A | 11-08-1995 |
| | | US 5436458 A | 25-07-1995 |
| | | US 5545899 A | 13-08-1996 |
| DE 102010051774 A1 | 24-05-2012 | DE 102010051774 A1 | 24-05-2012 |
| | | US 2014183370 A1 | 03-07-2014 |
| | | WO 2012065752 A2 | 24-05-2012 |
| DE 102012202500 A1 | 22-08-2013 | KEINE | |
| DE 102012224209 A1 | 10-07-2014 | DE 102012224209 A1 | 10-07-2014 |
| | | US 2014175299 A1 | 26-06-2014 |
| JP 2010243394 A | 28-10-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102010051774 A1